# EUROPÄISCHE PATENTSCHRIFT

(11) **EP 1 540 431 B1**
(45) Veröffentlichungstag und Bekanntmachung des Hinweises auf die Patenterteilung: **17.11.2010**
(21) Anmeldenummer: 03740069.4
(22) Anmeldetag: 10.06.2003
(51) Int. Cl.: G05B 19/042

(54) **VERFAHREN ZUM REGELN DES STROMS DURCH EIN ELEKTROMAGNETISCHES STELLGLIED**
METHOD FOR REGULATING THE CURRENT FLOWING THROUGH AN ELECTROMAGNETIC ACTUATOR
PROCEDE DE REGULATION DU COURANT TRAVERSANT UN ELEMENT D'AJUSTEMENT ELECTROMAGNETIQUE

(30) Priorität: 14.09.2002 DE 10242790
(43) Veröffentlichungstag der Anmeldung: 15.06.2005
(73) Patentinhaber: ROBERT BOSCH GMBH, 70442 Stuttgart (DE)
(72) Erfinder: KUEHN, Willi, 71706 Markgroeningen (DE); STUIBLE, Ewald, 71735 Eberdingen (DE); FACKLER, Rupert, 74385 Pleidelsheim (DE); KLEIN, Christian, 71739 Oberriexingen (DE); GUSSMANN, Bernd, 71083 Herrenberg (DE); SCHWIENTEK, Christian, 74172 Neckarsulm (DE); MUELLER-VOGT, Ingo, 70435 Stuttgart (DE)
(86) Internationale Anmeldenummer: PCT/DE2003/001904
(87) Internationale Veröffentlichungsnummer: WO 2004/027529

(56) Entgegenhaltungen:
- DE-A- 19 941 488
- US-A- 5 924 703

## Beschreibung

### Stand der Technik

Die Erfindung geht aus von einem Verfahren zum Regeln des Stroms durch ein elektromagnetisches Stellglied, wobei das Stellglied, ein erster Schalter und eine Strommessschaltung eine Serienschaltung bilden, wobei dem Stellglied (10) eine Freilaufdiode parallelgeschaltet ist, und wobei der erste Schalter von einer Regelung und einer Pulsgenerierung mittels eines PWM-Signals (PWM = Pulsweitenmodulation) derart geschlossen und geöffnet wird, dass der von der Strommessschaltung gemessene, durch das Stellglied fließende Strom auf einen Sollwert geregelt wird.

Ein derartiges Verfahren ist allgemein bekannt (siehe beispielsweise DE 199 41 488 A1 oder US 5,924,703). Bei der dem Verfahren zugrundeliegenden elektrischen Schaltung wird das PWM-Signal mit Hilfe des ersten Schalters in einen Stromüber das Stellglied umgesetzt. Im geschlossenen, wie auch im geöffneten Zustand des ersten Schalters wird der über das Stellglied fließende Strom von der Strommessschaltung gemessen. Auf dieser Grundlage wird der für die Regelung dieses Strom erforderliche Vergleich mit dem vorgegebenen Sollwert durchgeführt.

Ein Problem der bekannten Regelung besteht darin, dass das elektromagnetische Stellglied üblicherweise eine Hysterese aufweist. Dies führt beispielsweise beim Einsatz des Stellglieds bei einer Getriebesteuerung eines Kraftfahrzeugs dazu, dass exakte Schaltvorgänge des Getriebes aufgrund von aus der Hysterese resultierenden Ungenauigkeiten der Regelung nicht mehr ohne weiteres durchführbar sind.

### Aufgabe, Lösung und Vorteile der Erfindung

Aufgabe der Erfindung ist es, ein Verfahren zum Regeln des Stroms durch ein elektromagnetisches Stellglied zu schaffen, das eine höhere Genauigkeit der Regelung ermöglicht.

Diese Aufgabe wird bei einem Verfahren der eingangs genannten Art erfindungsgemäß dadurch gelöst, dass die Zeitdauer eines Ein- und Ausschaltzyklus des PWM-Signals verändert wird, und dass dem PWM-Signal eine sogenannte Ditherfunktion in der Form einer niederfrequenten Schwingung überlagert wird.

Die Veränderung der Zeitdauer eines Ein- und Ausschaltzyklus stellt eine Veränderung der sogenannten Chopperfrequenz des PWM-Signals dar. Durch eine derartige Veränderung der Chopperfrequenz ist es möglich, ein sogenanntes Sitzprellen des elektromagnetischen Stellglieds zu vermindern. Ebenfalls ist es möglich, die Hysterese des Stellglieds insbesondere im mittleren Strombereich durch eine Verminderung der Chopperfrequenz zu reduzieren. Die Chopperfrequenz kann temperaturabhängig gewählt werden, so dass die Reibungshysterese des Stellglieds durch ein Absenken der Chopperfrequenz vermindert wird. Insgesamt kann durch die Beeinflussung der Zeitdauer des Ein- und Ausschaltzyklus des PWM-Signals die erfindungsgemäße Regelung des Stroms durch das Stellglied wesentlich verbessert werden.

Durch die Ditherfunktion wird eine weitere Verbesserung dieser Regelung erreicht. Insbesondere wird der bewegliche Eisenkern des Stellglieds mit Hilfe der niederfrequenten Schwingung des PWM-Signals daran gehindert, in einen Zustand einer Haftreibung überzugehen. Es kann also der Eisenkern durch die Ditherfunktion fortlaufend in einem Zustand der Gleitreibung gehalten und damit eine minimale Hysterese des Stellglieds erreicht werden.

Besonders vorteilhaft ist es, wenn bei der Ditherfunktion jedem Puls des PWM-Signels ein Ditherwert hinzuaddiert oder subtrahiert wird. Die Zeitdauer, während der den Pulsen des PWM-Signals der Ditherwert hinzuaddiert wird, ist dabei vorzugsweise gleich der Zeitdauer, während der den Pulsen der Ditherwert abgezogen wird.

Dies bringt den Vorteil mit sich, dass die Ditherfunktion insgesamt keinen Einfluss auf den mittleren Strom hat, der durch das Stellglied fließt.

Bei einer besonders vorteilhaften Weiterbildung der Erfindung ergeben die beiden Zeitdauern eine gesamte Zeitdauer, die ein Vielfaches der Zeitdauer eines Ein- und Ausschaltzyklus des PWM-Signals ist.

Bei einer weiteren besonders vorteilhaften Weiterbildung der Erfindung wird der von der Strommessschaltung gemessene, durch das Stellglied fließende Strom von einer Korrektur von der Ditherfunktion befreit wird. Besonders vorteilhaft ist es dabei, wenn zwei Stromwerte im Zeitabstand derjenigen Zeitdauer gemessen werden, während der den Pulsen des PWM-Signals der Ditherwert hinzuaddiert oder subtrahiert wird, und dass ein Mittelwert dieser beiden gemessenen Stromwerte gebildet wird.

Durch die Mittelwertbildung der beiden, in dem genannten Zeitabstand gemessenen Stromwerte wird gewährleistet, dass die hinzuaddierten bzw. subtrahierten Ditherwerte sich gerade auslöschen. Auf diese Weise wird erreicht, dass die Ditherfunktion keinerlei Einfluss auf die Regelung des Stroms durch das Stellglied hat.

Bei einer vorteilhaften Ausgestaltung der Erfindung wird von einer Diagnose aus den gemessenen Ein- und Ausschaltzeitpunkten des ersten Schalters der Strom durch das Stellglied ermittelt, und es wird von der Diagnose dieser ermittelte Strom mit dem von der Strommessschaltung gemessenen Strom und/oder mit dem Sollwert verglichen.

Dies ermöglicht eine redundante Überprüfung der gesamten erfindungsgemäßen Regelung des Stroms durch das Stellglied. Es ist also nicht nur möglich, den gemessenen Strom mit dem Sollwert zu vergleichen, sondern es kann zusätzlich auch der aus den Ein- und Ausschaltzeitpunkten ermittelte Strom mit dem gemessenen Strom und/oder mit dem Sollwert verglichen werden. Es besteht damit die Möglichkeit, auf Kurzschlüsse und Stromabweichungen, die durch Fehlfunktionen bedingt sind, besser reagieren zu können.

Die Erfindung kann auch in der Form eines Computerprogramms oder in der Form eines Steuergerät realisiert sein. Das Computerprogramm kann dann auf einem elektronischen Speichermedium gespeichert sein. Das Steuergerät kann insbesondere diejenigen Komponenten der Erfindung enthalten, die in Software realisiert sind. Weiterhin kann das Steuergerät all diejenigen Bauteile aufweisen, die zur Kopplung der Software mit dem Stellglied und den dazugehörigen Hardware-Bauteilen erforderlich sind.

### Ausführungsbeispiele der Erfindung

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
Figur 1 zeigt ein schematisches Blockschaltbild eines Ausführungsbeispiels eines erfindungsgemäßen Systems zum Regeln des Stroms durch ein elektromagnetisches Stellglied,
Figur 2 zeigt ein schematisches Blockschaltbild eines Ausführungsbeispiels einer Regelung für das System der Figur 1, und
Figur 3 zeigt ein schematisches Zeitdiagramm des Ansteuersignals für den Strom durch das elektromagnetische Stellglied.

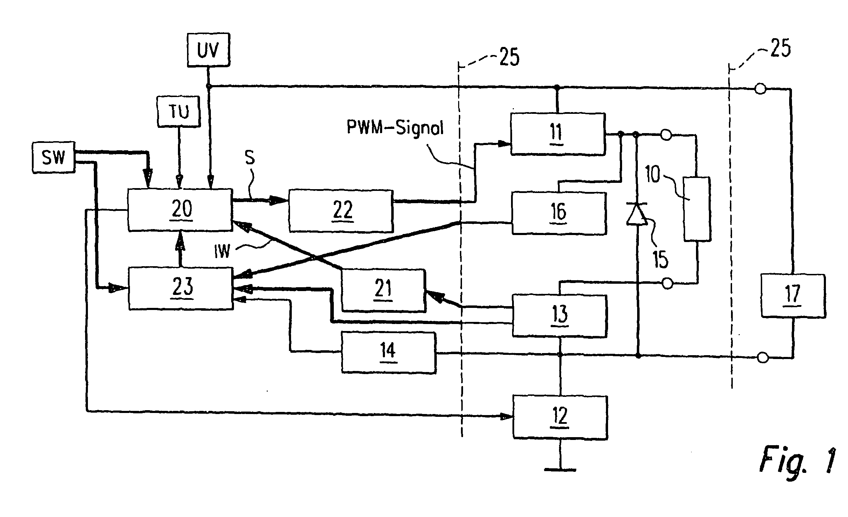

In der Figur 1 ist ein elektromagnetisches Stellglied 10 dargestellt, bei dem es sich beispielsweise um eine Spule mit einem darin verschiebbar angeordneten Eisenkern handeln kann. Das Stellglied 10 kann beispielsweise bei einer Getriebesteuerung eines Kraftfahrzeugs oder als ein Einspritzventil einer Brennkraftmaschine oder dergleichen eingesetzt werden.

Das Stellglied 10 ist über einen ersten Schalter 11 an eine Versorgungsspannung UV und über einen zweiten Schalter 12 an Masse angeschlossen. Zwischen dem Stellglied 10 und dem zweiten Schalter 12 ist eine Strommessschaltung 13 zwischengeschaltet und eine Überwachung 14 angeschlossen. Parallel zu dem Stellglied 10 und der Strommessschaltung 13 ist eine Freilaufdiode 15 geschaltet.

An den Verbindungspunkt des Stellglieds 10 und des ersten Schalters 11 ist eine Diagnoseschaltung 16 angeschlossen. Der Verbindungspunkt der Strommessschaltung 13 und der Überwachung 14 ist über einen Widerstand 17 mit der Versorgungsspannung UV verbunden.

Eine Regelung 20 wird mit der Versorgungsspannung UV, mit einem die Umgebungstemperatur TU darstellenden Signal und einem einen Sollwert SW kennzeichnenden Signal beaufschlagt. Ein von der Strommessschaltung 13 erzeugtes Signal wird von einer Korrektur 21 verarbeitet, um dann an die Regelung 20 weitergegeben zu werden. Die Regelung 20 steuert einerseits über eine Pulsgenerierung 22 den ersten Schalter 11 sowie andererseits direkt den zweiten Schalter 12 an.

Eine Diagnose 23 wird von Signalen beaufschlagt, die von der Diagnoseschaltung 16, der Strommessschaltung 13 und der Überwachung 14 erzeugt werden. Weiterhin liegt an der Diagnose 23 noch der Sollwert SW an. In Abhängigkeit davon kann die Diagnose 23 auf die Regelung 20 einwirken.

In der Figur 1 ist nur ein einziges Stellglied 10 dargestellt. Das dargestellte System ist dazu geeignet, den Strom durch dieses Stellglied 10 zu regeln. Es ist jedoch ebenfalls möglich, dass eine Mehrzahl von Stellgliedern 10 vorhanden sind. In diesem Fall sind diejenigen Komponenten, die in der Figur 1 zwischen den beiden gestrichelten Linien 25 angeordnet sind, in einer entsprechenden Mehrzahl vorhanden. Es sind also in diesem Fall nicht nur eine Mehrzahl von Stellgliedern 10 vorhanden, sondern auch eine Mehrzahl jeweils zugehöriger erster Schalter 11, Strommessschaltungen 13, Freilaufdioden 15 und Diagnoseschaltungen 16.

Die Mehrzahl von Stellglieder 10 werden dann parallel zueinander in derselben Art und Weise angesteuert, wie dies in der Figur 1 dargestellt und bereits erläutert worden ist. In der Figur 1 sind zu diesem Zweck diejenigen Verbindungen, die in diesem Fall mehrfach vorhanden sind, als dickere Linien dargestellt. Bei diesen Verbindungen kann es sich beispielsweise um Bus-Verbindungen handeln, bei denen jedem Stellventil 10 eine einzelne Leitung der Bus-Verbindung zugeordnet ist.

Die zwischen den beiden Linien 25 dargestellten Komponenten sind als Hardware-Bauteile ausgeführt. Die in der Figur 1 links von den Linien 25 dargestellten Komponenten sind vorzugsweise als Software realisiert und zur Ausführung durch einen Mikroprozessor oder dergleichen vorgesehen. Zu diesem Zweck ist ein Computerprogramm vorhanden, dessen Programmbefehle dazu geeignet sind, auf dem Mikroprozessor ausgeführt zu werden. Das Computerprogramm ist vorzugsweise auf einem Flash-memory gespeichert, der zusammen mit dem Mikroprozessor in einem Steuergerät untergebracht ist. Zwischen den Hardware-Bauteilen und dem Mikroprozessor bzw. dem Steuergerät können Schnittstellen, Analog/DigitalWandler und dergleichen vorhanden sein, die in der Figur 1 nicht dargestellt sind.

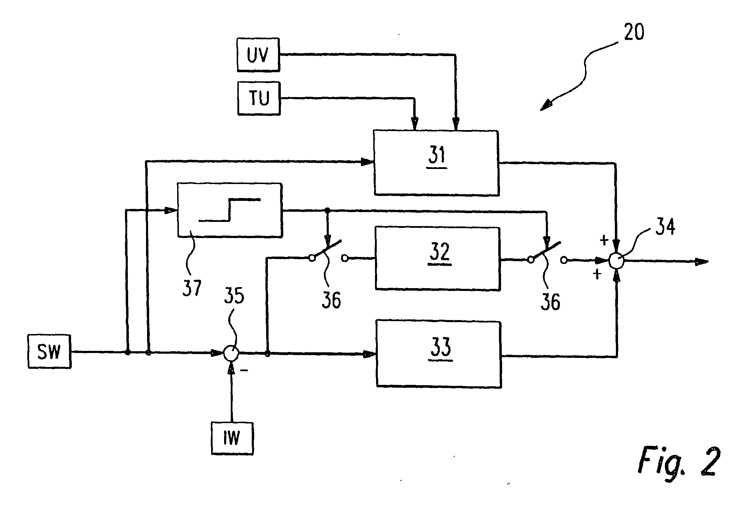

Die Regelung 20 der Figur 1 ist in der Figur 2 detaillierter dargestellt. Die Regelung 20 weist eine Vorsteuerung 31, einen I-Anteil 32 und einen P-Anteil 33 auf.

Die Vorsteuerung 31 wird von der Versorgungsspannung UV, der Umgebungstemperatur TU und dem Sollwert SW beaufschlagt. In Abhängigkeit davon erzeugt die Vorsteuerung 31 ein Signal, das einer Additionsstelle 34 zugeführt ist. Die Vorsteuerung 31 hat die Aufgabe, die von dem I-Anteil 32 und dem F-Anteil 33 auszugleichende Abweichung möglichst gering zu halten.

Ein Istwert IW wird an einer Subtraktionsstelle 35 von dem Sollwert SW abgezogen. Der Istwert IM entspricht dabei demjenigen Signal, das von der Korrektur 21 der Figur 1 erzeugt wird. Die von der Subtraktionsstelle 35 ermittelte Differenz beaufschlagt den 1-Anteil 32 und den P-Anteil 33. Der P-Anteil 33 erzeugt ein Signal, das der Additionsstelle 34 zugeführt ist.

Die Erzeugung des I-Anteils 32 kann mit Hilfe zweier Schalter 36 unterbrochen werden. Zu diesem Zweck werden die beiden Schalter 36 von einem Block 37 angesteuert, der seinerseits von dem Sollwert SW beaufschlagt ist.

Durch einen fortlaufenden Vergleich zeitlich aufeinanderfolgender Werte erkennt der Block 37, ob der Sollwert SW einen Sprung ausführt, der einen vorgegebenen Maximalsprung übersteigt. Ist dies der Fall, so öffnet der Block 37 die beiden Schalter 36 und unterbricht die Erzeugung des I-Anteils 32. Der Sprung des Sollwerts SW wird dann allein von dem P-Anteil 33 ausgeregelt. Die Dauer der Unterbrechung des 1-Anteils 33 kann fest vorgegeben oder variabel gewählt sein, beispielsweise in Abhängigkeit von der Sprunghöhe des Sollwerts SM.

Wird von dem Block 37 kein Sprung erkannt, so bleiben die Schalter 36 geschlossen und der I-Anteil 32 ist aktiv. Der 1-Anteil 32 ist dann der Additionsstelle 34 zugeführt. Es wird an dieser Stelle nochmals darauf hingewiesen, dass die Regelung 20 der Figur 2 und damit auch die Schalter 36 vorzugsweise als Software realisiert sind.

Die von der Additionsstelle 34 erzeugte Summe S entspricht demjenigen Signal, das von der Regelung 20 erzeugt und der Pulsgenerierung 22 zugeführt wird.

Das in der Figur 1 dargestellt System zum Regeln des Stroms durch das/die Stellglied/er 10 funktioniert wie folgt:
Der Strom über das Stellglied 10 wird mit Hilfe des ersten Schalters 11 eingestellt. Der erste Schalter 11 wird zu diesem Zweck mit einem PWM-Signal (PWM = Pulsweitenmodulation) beaufschlagt. Der zweite Schalter 12 ist im normalen Betrieb geschlossen.

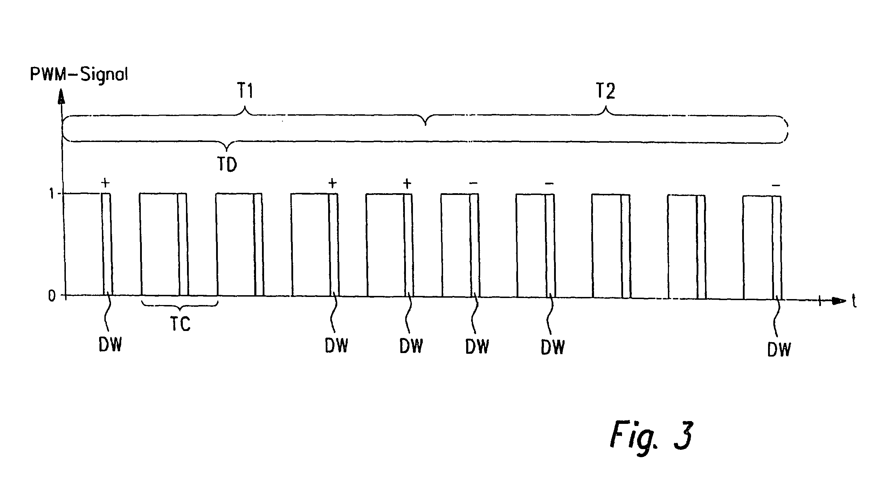

Ein derartiges PWM-Signal ist beispielhaft in der Figur 3 über der Zeit t aufgetragen. Das PWM-Signal unterscheidet nur zwischen einem eingeschalteten Zustand ("1"), in dem der erste Schalter 11 geschlossen ist, und einem ausgeschalteten Zustand ("0"), in dem der erste Schalter 11 geöffnet ist. Bei geschlossenem erstem Schalter 11 fließt ein Strom von der Spannungsversorgung UV über den ersten Schalter 11, das Stellglied 10, die Strommessschaltung 13 und den geschlossenen zweiten Schalter 12 nach Masse. Bei geöffnetem erstem Schalter 11 fließt kein derartiger Strom. Durch eine Variation der Ein- und Ausschaltzeitdauern des PWM-Signals kann somit der durch das Stellglied 10 fließende Strom beeinflusst werden.

Das PWM-Signal wird von der Pulsgenerierung 22 in Abhängigkeit von dem Ausgangssignal der Regelung 20 erzeugt. Insbesondere wird von der Pulsgenerierung 22 das Ausgangssignal der Regelung 20 in ein PWM-Signal umgesetzt, dessen Verhältnis der Ein- und Ausschaltzeitdauern der Größe des Ausgangssignal entspricht.

Die Zeitdauer TC eines Ein- und Ausschaltzyklus des PWM-Signals entspricht der sogenannten Chopperfrequenz des PWM-Signals. Die Regelung 20 und/oder die Pulsgenerierung 22 können diese Zeitdauer TC variabel verändern. Sind eine Mehrzahl von Stellgliedern 10 vorhanden, so können deren Zeitdauern TC unabhängig voneinander und variabel verändert werden.

Um zu gewährleisten, dass die Ein- und/oder Ausschaltzeitpunkte der zu den verschiedenen Stellgliedern 10 zugehörigen ersten Schalter 11 möglichst nicht gleichzeitig auftreten, werden die einzelne Stellglieder 10 phasenversetzt angesteuert. Durch eine Variation der Zeitdauern TC kann diese Phasenbeziehung derart beeinflusst werden, dass möglichst wenig Schaltflanken aufeinander fallen.

Die Veränderung der Zeitdauern TC und damit der Chopperfrequenz kann auch dazu verwendet werden, eine Reduktion des sogenannten Sitzprellens des Stellglieds 10 durch eine kleinere Hubamplitude des verschiebbaren Eisenkerns bei einer größeren Chopperfrequenz zu erreichen. Durch eine geringere Chopperfrequenz kann insbesondere in einem mittleren Strombereich die Hysterese des Stellglieds 10 vermindert werden. Die Chopperfrequenz kann derart temperaturabhängig eingestellt werden, dass bei tieferen Temperaturen die Chopperfrequenz vermindert wird, so dass eine bei tieferen Temperaturen vorhandene Reibungshysterese des Stellglieds 10 vermindert wird.

Die Regelung 20 und/oder die Pulsgenerierung 22 können eine sogenannte Ditherfunktion durchführen, bei der es sich um eine niederfrequente Schwingungsüberlagerung für den Strom durch das Stellglied 10 handelt. Dabei wird zu dem an sich ermittelten PWM-Signal ein vorgebbarer Ditherwert DW hinzuaddiert oder subtrahiert. Diese Ditherfunktion kann für eine Mehrzahl von Stellgliedern 10 unabhängig voneinander und variabel ausgeführt werden.

Für ein einzelnes Stellglied 10 ist dies in der Figur 3 dadurch dargestellt, dass die einzelnen Pulse des PWM-Signals zuerst um den Ditherwert DW verlängert und danach verkürzt sind. Die Zeitdauer T1, in der die einzelnen Pulse verlängert werden, ist gleich der Zeitdauer T2, in der die Pulse verkürzt werden. Die sich aus den beiden vorgenannten Zeitdauern T1, T2 additiv ergebende, gesamte Zeitdauer TD der Ditherfunktion ist ein Vielfaches der Zeitdauer TC der Chopperfrequenz. Im vorliegenden Fall ist die Zeitdauer TD das Zehnfache der Zeitdauer TC.

Ergänzend ist es möglich, durch eine Veränderung der zeitlichen Länge des Ditherwerts DW auch die Amplitude der Ditherfunktion zu variieren.

Mit Hilfe der Ditherfunktion kann insbesondere verhindert werden, dass der bewegliche Eisenkern des angesteuerten Stellglieds 10 in den Zustand einer Haftreibung übergeht. Es kann also der Eisenkern durch die Ditherfunktion fortlaufend in einem Zustand der Gleitreibung gehalten und damit eine minimale Hysterese des Stellglieds 10 erreicht werden.

Die Regelung 20 wird in vorgegebenen zeitlichen Abständen angestoßen und entsprechend der Anzahl der vorhandenen Stellglieder 10 ausgeführt. Es werden für alle vorhandenen Stellglieder 10 entsprechende Ausgangssignal von der Regelung 20 an die Pulsgenerierung 22 weitergegeben, die dann fortlaufend die jeweils zugehörigen PWM-Signale für die verschiedenen Stellglieder 10 erzeugt, mit denen schließlich die zu den verschiedenen Stellgliedern 10 jeweils zugehörigen ersten Schalter 11 angesteuert werden.

Der auf diese Weise über die verschiedenen Stellglieder 10 fließende Strom wird von der jeweils zugehörigen Strommessschaltung 13 gemessen. Bei der Strommessschaltung kann es sich dabei vorzugsweise um einen sogenannten Shunt-Widerstand handeln. Der gemessene Stromwert wird an die Korrektur 21 weitergegeben, wo die von der Regelung 20 bzw. der Pulsgenerierung 22 eingeführte Ditherfunktion wieder herausgerechnet wird. Damit wird erreicht, dass die Ditherfunktion keinerlei Einfluss auf die Regelung 20 hat.

Die Ditherfunktion kann in der Korrektur 21 beispielsweise dadurch kompensiert werden, dass aus zwei im Zeitabstand der Zeitdauer T1 gemessenen Stromwerte der Mittelwert gebildet wird. Aufgrund des Zusammenhangs zwischen der Zeitdauer TD der Ditherfunktion und der Zeitdauer TC der Chopperfrequenz ist in dem vorgenannten Mittelwert die Ditherfunktion und insbesondere der Ditherwert DW nicht mehr enthalten.

Wie bereits erläutert wurde, wird von der Korrektur 21 der gemessene und von der Ditherfunktion befreite Stromwert an die Regelung 20 als Istwert IW weitergegeben.

Der gemessenen Stromwert wird von der Strommessschaltung 13 auch an die Diagnose 23 weitergegeben. Dort wird der gemessene Stromwert mit dem Sollwert SW verglichen. Bei einer Abweichung, die einen vorgebbaren Maximalwert übersteigt, kann die Diagnose 23 über die Regelung 20 entweder korrigierend eingreifen oder den Strom durch das betreffende Stellglied 10 oder gar für alle vorhandenen Stellglieder 10 abschalten.

Das zwischen dem/den Stellglied/ern 10 und dem zweiten Schalter 12 vorhandene Potential wird von der Überwachung 14 überwacht und an die Diagnose 23 weitergegeben. Ist dieses Potential fehlerhaft, liegt insbesondere ein Kurzschluss zu der Versorgungsspannung UV vor, so wird der zweite Schalter 12 von der Diagnose 23 über die Regelung 20 unverzüglich geöffnet, so dass kein Strom mehr über das/die Stellglied/er 10 fließen kann.

Das zwischen dem/den Stellgliad/ern 10 und dem ersten Schalter 11 vorhandene Potential wird von der Diagnoseschaltung 16 überwacht und an die Diagnose 23 weitergegeben. Ist dieses Potential fehlerhaft, liegt insbesondere ein Kurzschluss nach Masse vor, so wird der erste Schalter 11 von der Diagnose 23 über die Regelung 20 unverzüglich bleibend geöffnet, so dass kein Strom mehr über das/die Stellglied/er 10 fließen kann.

Weiterhin erkennt die Diagnoseschaltung 16 diejenigen Zeitpunkte, in denen der/die erste/n Schalter 11 geöffnet und geschlossen wird/werden. Aus diesen gemessenen Zeitpunkten kann von der Diagnose 23 der jeweilige Stromwert ermittelt werden, der durch das zugehörige Stellglied 10 fließt. Dieser ermittelte Stromwert wird mit dem von der Strommessschaltung 13 gemessenen Stromwert und/oder mit dem Sollwert SW verglichen. Wird von der Diagnose 23 eine Abweichung festgestellt, die größer ist als ein vorgegebener Maximalwert, so kann wiederum der Strom durch das zugehörige Stellglied 10 oder durch alle vorhandenen Stellglieder 10 über die Regelung 20 abgeschaltet werden.

Insgesamt wird auf diese Weise der durch das Stellglied 10 fließende Strom mehrfach und damit redundant überwacht. Dies gilt auch bei einer Mehrzahl von vorhandenen Stellgliedern 10.

Vor dem ersten Betrieb des in der Figur 1 gezeigten Systems zum Regeln des Stroms durch das/die Stellglied/er 10, also insbesondere während einer Initialisierung des Systems, ist der zweite Schalter 12 noch geöffnet, so dass kein Strom über das/die Stellglied/er 10 fließt. Das Potential zwischen dem/den Stellglied/ern 10 und dem zweiten Schalter 12 kann somit an sich nicht ermittelt werden.

Dies wird jedoch mit Hilfe des Widerstands 17 ermöglicht. Der Widerstand 17 ist dabei nur einmalig vorhanden und weist einen eher großen Widerstandswert auf. Aufgrund des Widerstands 17 kann das Potential zwischen dem/den Stellglied/ern 10 und dem zweiten Schalter 12 von der Überwachung 14 ermittelt und somit ein Kurzschluss zur Versorgungsspannung UV oder nach Masse festgestellt werden.

Abweichend von der Figur 1 ist es alternativ möglich, dass das PWM-Signal den zweiten Schalter beaufschlagt und der erste Schalter im normalen Betrieb fortlaufend geschlossen bleibt. Die Diagnoseschaltung ist in diesem Fall dem zweiten Schalter und die Überwachung dem ersten Schalter zugeordnet. Ansonsten sind jedoch die variable Chopperfrequenz und die Ditherfunktion in gleicher Weise anwendbar, wie dies in der Figur 1 beschrieben ist.

## Patentansprüche

1. Verfahren zum Regeln des Stroms durch ein elektromagnetisches Stellglied (10), wobei das Stellglied (10), ein erster Schalter (11) und eine Strommessschaltung (13) eine Serienschaltung bilden, wobei dem Stellglied (10) eine Freilaufdiode (15) parallelgeschaltet ist, und wobei der erste Schalter (11) von einer Regelung (20) und einer Pulsgenerierung (22) mittels eines PWM-Signals (PWM = Pulsweitenmodulation) derart geschlossen und geöffnet wird, dass der von der Strommessschaltung (13) gemessene, durch das Stellglied (10) fließende Strom auf einen Sollwert (SW) geregelt wird, **dadurch gekennzeichnet, dass** die Zeitdauer (TC) eines Ein- und Ausschaltzyklus des PWM-Signals verändert wird, und dass dem PWM-Signal eine sogenannte Ditherfunktion in der Form einer niederfrequenten Schwingung überlagert wird.

2. Verfahren nach Anspruch 1, **dadurch gekennzeichnet, dass** bei der Ditherfunktion jedem Puls des PWM-Signals ein Ditherwert (DW) hinzuaddiert oder subtrahiert wird.

3. Verfahren nach Anspruch 2, **dadurch gekennzeichnet, dass** die Zeitdauer (T1), während der den Pulsen des PWM-Signals der Ditherwert (DW) hinzuaddiert wird, gleich ist der Zeitdauer (T2), während der den Pulsen der Ditherwert (DW) abgezogen wird.

4. Verfahren nach Anspruch 3, **dadurch gekennzeichnet, dass** die beiden Zeitdauern (T1, T2) eine gesamte Zeitdauer (TD) ergeben, die ein Vielfaches der Zeitdauer (TC) eines Ein- und Ausschaltzyklus des PWM-Signals ist.

5. Verfahren nach einem der vorstehenden Ansprüche, **dadurch gekennzeichnet, dass** der von der Strommessschaltung (13) gemessene Wert des durch das Stellglied (10) fließenden Stroms von einer Korrektur (21) von der Ditherfunktion befreit wird.

6. Verfahren nach Anspruch 5 und Anspruch 4, **dadurch gekennzeichnet, dass** zwei Stromwerte im Zeitabstand derjenigen Zeitdauer (T1) gemessen werden, während der den Pulsen des PWM-Signals der Ditherwert (DW) hinzuaddiert oder subtrahiert wird, und dass ein Mittelwert dieser beiden gemessenen Stromwerte gebildet wird.

7. Verfahren nach einem der vorstehenden Ansprüche, **dadurch gekennzeichnet, dass** von einer Diagnose (23) aus den gemessenen Ein- und Ausschaltzeitpunkten des ersten Schalters (11) der Strom durch das Stellglied (10) ermittelt wird, und dass von der Diagnose (23) dieser ermittelte Strom mit dem von der Strommessschaltung (13) gemessenen Strom und/oder mit dem Sollwert (SW) verglichen wird.

8. Computerprogramm mit Programmbefahlen, die dazu geeignet sind, das Verfahren nach einem der vorstehenden Ansprüche durchzuführen, wenn sie auf einem Computer, insbesondere einem Mikroprozessor ausgeführt werden.

9. Elektronisches Speichermedium, insbesondere Flash-Memory, auf dem das Computerprogramm nach Anspruch 8 gespeichert ist.

10. Steuergerät zum Regeln des Stroms durch ein elektromagnetisches Stellglied (10), wobei das Stellglied (10), ein erster Schalter (11) und eine Strommessschaltung (13) eine Serienschaltung bilden, wobei dem Stellglied (10) eine Freilaufdiode (15) parallelgeschaltet ist, und wobei das Steuergerät eine Regelung (20) und eine Pulsgenerierung (22) aufweist, von denen der erste Schalter (11) mittels eines PWM-Signals (PWM = Pulsweitenmodulation) derart geschlossen und geöffnet wird, dass der von der Strommessschaltung (13) gemessene, durch das Stellglied (10) fließende Strom auf einen Sollwert (SW) geregelt wird, **dadurch gekennzeichnet, dass** das Steuergerät dazu geeignet ist, die Zeitdauer (TC) eines Ein- und Ausschaltzyklus des PWM-Signals zu verändern und dem PWM-Signal eine sogenannte Ditherfunktion in der Form einer niederfrequenten Schwingung zu überlagern.

11. Steuergerät nach Anspruch 10, **gekennzeichnet durch** dessen Verwendung in einem Kraftfahrzeug, insbesondere bei einer Getriebesteuerung eines Kraftfahrzeugs.

## Claims

1. Method for regulating the current through an electromagnetic actuator (10), with the actuator (10), a first switch (11) and a current measuring circuit (13) forming a series circuit, with a freewheeling diode (15) being connected in parallel with the actuator (10), and with the first switch (11) being closed and opened by a regulation means (20) and a pulse generation means (22) by means of a PWM signal (PWM = pulse-width modulation) in such a way that the current measured by the current measuring circuit (13) and flowing through the actuator (10) is regulated at a setpoint value (SW), **characterized in that** the period (TC) of a switch-on and switch-off cycle of the PWM signal is varied, and **in that** a so-called dither function in the from of a low-frequency oscillation is superimposed on the PWM signal.

2. Method according to Claim 1, **characterized in that**, in the event of the dither function, a dither value (DW) is added to or subtracted from each pulse of the PWM signal.

3. Method according to Claim 2, **characterized in that** the period (T1), during which the dither value (DW) is added to the pulses of the PWM signal, is equal to the period (T2), during which the dither value (DW) is subtracted from the pulses.

4. Method according to Claim 3, **characterized in that** the two periods (T1, T2) produce a total period (TD) which is a multiple of the period (TC) of a switch-on and switch-off cycle of the PWM signal.

5. Method according to one of the preceding claims, **characterized in that** the value of the current flowing through the actuator (10), which value is measured by the current measuring circuit (13), is freed from the dither function by a correction means (21).

6. Method according to Claim 5 and Claim 4, **characterized in that** two current values are measured at a time interval from that period (T1) during which the dither value (DW) is added to or subtracted from the pulses of the PWM signal, and **in that** an average value of these two measured current values is calculated.

7. Method according to one of the preceding claims, **characterized in that** the current through the actuator (10) is determined from the measured switch-on and switch-off times of the first switch (11) by a diagnosis means (23), and **in that** this determined current is compared with the current measured by the current measuring circuit (13) and/or with the setpoint value (SW) by the diagnosis means (23).

8. Computer program containing program instructions which are suitable for executing the method according to one of the preceding claims when said program instructions are run on a computer, in particular a microprocessor.

9. Electronic memory medium, in particular a flash memory, in which the computer program according to Claim 8 is stored.

10. Controller for regulating the current through an electromagnetic actuator (10), with the actuator (10), a first switch (11) and a current measuring circuit (13) forming a series circuit, with a freewheeling diode (15) being connected in parallel with the actuator (10), and with the controller having a regulation means (20) and a pulse generation means (22) by which the first switch (11) is closed and opened by means of a PWM signal (PWM = pulse-width modulation) in such a way that the current measured by the current measuring circuit (13) and flowing through the actuator (10) is regulated at a setpoint value (SW), **characterized in that** the controller is suitable for varying the period (TC) of a switch-on and switch-off cycle of the PWM signal and superimposing a so-called dither function in the form of a low-frequency oscillation on the PWM signal.

11. Controller according to Claim 10, **characterized by** the use of said controller in a motor vehicle, in particular in a transmission control of a motor vehicle.

## Revendications

1. Procédé de régulation du courant qui traverse un organe électromagnétique de commande (10), l'organe de commande (10), un premier commutateur (11) et un circuit (13) de mesure de courant formant un circuit série, une diode (15) à passage libre étant raccordée en parallèle à l'organe de commande (10) et le premier commutateur (11) étant fermé et ouvert par une régulation (20) et un générateur d'impulsions (22) au moyen d'un signal PWM (PWM = modulation de la largeur d'impulsions) de telle sorte que le courant qui est mesuré par le circuit (13) de mesure de courant et qui traverse l'organe de commande (10) soit régulé à une valeur de consigne (SW), **caractérisé en ce que** la durée (TC) d'un cycle de branchement et de débranchement du signal PWM est modifiée et **en ce qu'**une fonction dite de tremblement qui présente la forme d'une oscillation à basse fréquence est superposée au signal PWM.

2. Procédé selon la revendication 1, **caractérisé en ce que** dans la fonction de tremblement, une valeur de tremblement (DW) est ajoutée à chaque impulsion du signal PWM ou soustraite de celle-ci.

3. Procédé selon la revendication 2, **caractérisé en ce que** la durée (T1) pendant laquelle la valeur de tremblement (DW) est ajoutée aux impulsions du signal PWM est identique à la durée (T2) pendant laquelle la valeur de tremblement (DW) est soustraite des impulsions.

4. Procédé selon la revendication 3, **caractérisé en ce que** les deux durées (T1, T2) donnent une durée totale (TD) qui est un multiple de la durée (TC) d'un cycle de branchement et de débranchement du signal PWM.

5. Procédé selon l'une des revendications précédentes, **caractérisé en ce que** la valeur mesurée par le circuit (13) de mesure de courant du courant qui traverse l'organe de commande (10) est débarrassée de la fonction de tremblement par une correction (21).

6. Procédé selon la revendication 5 ou la revendication 4, **caractérisé en ce que** deux valeurs de courant sont mesurées à un intervalle de temps qui correspond à la durée (T1) pendant laquelle la valeur de tremblement (DW) est ajoutée aux impulsions du signal PWM ou soustraite de celles-ci et **en ce qu'**une valeur moyenne de ces deux valeurs de courant mesurées est formée.

7. Procédé selon l'une des revendications précédentes, **caractérisé en ce qu'**à partir des points mesurés de branchement et de débranchement du premier commutateur (11), un diagnostic (23) détermine le courant qui traverse l'organe de commande (10) et **en ce que** le diagnostic (23) compare le courant ainsi déterminé avec le courant mesuré par le circuit (13) de mesure de courant et/ou avec la valeur de consigne (SW).

8. Programme informatique doté d'ordres de programme qui permettent d'exécuter le procédé selon l'une des revendications précédentes lorsqu'ils sont exécutés sur un ordinateur et en particulier sur un microprocesseur.

9. Support électronique de mémoire, en particulier mémoire flash, sur lequel le programme informatique selon la revendication 8 est conservé.

10. Appareil de commande qui régule le courant qui traverse un organe électromagnétique de commande (10), l'organe de commande (10), un premier commutateur (11) et un circuit (13) de mesure de courant formant un circuit série, une diode (15) à passage libre étant raccordée en parallèle à l'organe de commande (10) et l'appareil de commande présentant une régulation (20) et un générateur d'impulsions (22) dont le premier commutateur (11) est fermé et ouvert au moyen d'un signal PWM (PWM = modulation de la largeur d'impulsions) de telle sorte que le courant qui est mesuré par le circuit (13) de mesure de courant et qui traverse l'organe de commande (10) soit régulé à une valeur de consigne (SW), **caractérisé en ce que** l'appareil de commande permet de modifier la durée (TC) d'un cycle de branchement et de débranchement du signal PWM et de superposer au signal PWM une fonction dite de tremblement qui présente la forme d'une oscillation à basse fréquence.

11. Appareil de commande selon la revendication 10, **caractérisé en ce qu'**il est utilisé dans un véhicule automobile et en particulier dans la commande de la transmission d'un véhicule automobile.
